# EUROPÄISCHE PATENTANMELDUNG

(11) **EP 1 998 041 A2**
(43) Veröffentlichungstag der Anmeldung: **03.12.2008**
(21) Anmeldenummer: 08002021.7
(22) Anmeldetag: 04.02.2008
(51) Int. Cl.: F03D 1/00, F03D 7/02, F03D 9/00, F03D 11/00

(54) **Windkraftanlage mit verspanntem Getriebe**

(30) Priorität: 22.02.2007 DE 102007008761
(71) Anmelder: Schuler Pressen GmbH & Co. KG, 73033 Göppingen (DE)
(72) Erfinder: Fahrenbach, Jürgen, 73101 Aichelberg (DE)
(74) Vertreter: Rüger, Barthelt & Abel Patentanwälte

(57) **Zusammenfassung**

Eine Windkraftanlage (1) weist ein Getriebe auf, über das zumindest zwei elektrische Maschinen (8, 9) angekoppelt sind. Eine (8) läuft als Generator. Die andere (9) kann sowohl als Generator als auch als Motor laufen. Im Motorbetrieb bewirkt sie die Verspannung des Getriebes und beseitigt so die schädlichen Auswirkungen von Drehmomentschwankungen, die ansonsten zu Getriebeschäden führen könnten. Dies ermöglicht den Einsatz von Getrieben mit relativ grober Verzahnung und relativ großem Zahnflankenspiel und mindert zugleich die zu berücksichtigenden Getriebelasten.

## Beschreibung

Die Erfindung betrifft eine Windkraftanlage, insbesondere für Binnenstandorte.

Windkraftanlagen mit Turm, an der Turmspitze gelagerter Gondel und an der Gondel drehbar gelagertem Rotor sind bekannt. Der Rotor ist mit zumindest einem an der Gondel vorgesehenen elektrischen Generator gekoppelt, der die Drehung des Rotors in elektrische Leistung umsetzt. Zwischen dem Rotor und dem Generator ist meist ein Getriebe vorgesehen, das die geringe Rotordrehzahl auf eine hohe Generatordrehzahl umsetzt.

Dazu ist es auch bekannt geworden, eine Leistungsverzweigung vorzusehen. Dazu wird auf die US-PS 6731017 verwiesen. Gemäß dieser Druckschrift ist der Rotor mit einem Getriebeeingangszahnrad verbunden, das mehrere Vorgelegewellenzahnräder und Vorgelegewellen treibt. Von den Vorgelegewellen führen Zahnradpaare auf Generatoren, die elektrische Leistung liefern.

Im realen Betrieb wirken auf die Rotorblätter in Abhängigkeit von den lokal herrschenden Windgeschwindigkeiten wechselnde Kräfte ein. Insbesondere an Binnenstandorten kann der auf den Rotor treffende Wind sehr böig sein.

Die wechselnden Windgeschwindigkeiten können Rotorblätter zu Schwingungen anregen. Rotorblattschwingungen führen dabei zu Drehmomentvariationen an der Nabe des Rotors. Diese können so groß werden, dass mitlaufende Generatoren gerade bei geringer elektrischer Belastung soviel Schwung aufweisen, dass es kurzzeitig zur Drehmomentumkehr an dem Getriebe kommt. Dies kann aufgrund des im Getriebe unweigerlich vorhandenen Zahnflankenspiels zu Schlägen an den Zahnrädern und zu Getriebeschäden führen.

Auch treten regelmäßige Schwankungen des Drehmoments und der Winkelgeschwindigkeit der Nabe auf, wenn ein Rotorflügel den oberen Gipfelpunkt seiner Kreisbahn durchläuft. An dieser Stelle ändert die schwerkraftbedingte Rotorflügeldurchbiegung wegen des Vorzeichenwechsels der auf den Rotorflügel einwirkenden Schwerkraft ihre Richtung. Dadurch werden Rotorflügelschwingungen und Nadbenschwingungen, d.h. Drahzahlvariationen der Nabendrehzahl induziert, die als Variationen der Stromproduktion die Netzqualität beeinträchtigen.

Die Rotorschwingungen können zu einer Minderung der Netzqualität führen. Die an der Rotorwelle auftretenden Drehschwingungen bilden sich in entsprechenden Leistungsschwankungen des angeschlossenen Generators und somit letztendlich in Netzspannungsschwankungen ab.

Davon ausgehend ist es Aufgabe der Erfindung, eine verbesserte Windenergieanlage zu schaffen.

Diese Aufgabe wird mit der Windkraftanlage nach Anspruch 1 gelöst:

Die erfindungsgemäße Windkraftanlage weist zwischen ihrem Generator und ihrem Rotor ein Übersetzungsgetriebe auf. An das Übersetzungsgetriebe ist neben dem Generator eine weitere elektrische Maschine angeschlossen, die wenigstens zeitweilig als Motor betreibbar ist. Die zum Betrieb des Motors erforderliche elektrische Leistung kann im elektrischen Netz, einem Energiespeicher und/oder einem elektrischen Zwischenkreis entnommen werden, der von dem Generator der Windkraftanlage gespeist wird. Es kommt dadurch zur Verspannung des Getriebes bzw. zu einer Vorspannung desselben, so dass Rotorblattschwingungen nicht mehr zur Drehmomentumkehr an den den Generator treibenden Zahnrädern führen. Damit wird die Gefahr von Zahnausbrüchen oder sonstigen Getriebeschäden nachhaltig gemindert. Es können letztendlich schwächer dimensionierte Getriebe eingesetzt werden, was eine Material- und Gewichtsersparnis bedeutet, ohne dass die Zuverlässigkeit der Getriebe dadurch beeinträchtigt würde.

Der wenigstens zeitweilige Betrieb der elektrischen Maschine als Motor ermöglicht es außerdem, Rotorschwingungen aktiv zu begegnen. Dazu können bei Feststellung einer Rotorschwingung entsprechende Schwingungen gegenphasig in die Nabe eingeleitet werden. Dazu kann die als Motor betreibbare elektrische Maschine genutzt werden. Dies ist eine aktive Dämpfung der Rotorblattschwingungen. Durch die Eliminierung von Rotorblattschwingungen lässt sich somit der Verschlechterung der Netzqualität durch Rotorblattschwingungen begegnen. Es wird verhindert, dass sich Rotorblattschwingungen aufschaukeln können und dann im aufgeschaukelten Zustand die Netzqualität verschlechtern. Dies gilt insbesondere, wenn zur Speisung des Motors ein Energiespeicher genutzt wird. Es gilt aber (zumindest im "eingeschwungenen Zustand", d.h. wenn durch die Gegenkopplung die Schwingungen getilgt sind) auch, wenn kein solcher Energiespeicher vorhanden ist.

Bei einer verfeinerten Ausführungsform der Erfindung werden die Rotorblätter eines beispielsweise dreiflügeligen Rotors auf unterschiedliche Eigenfrequenzen abgestimmt. Dadurch wird verhindert, dass die Gegenkopplung der Rotorschwingung eines Rotorblatts zu einer Anregung der Rotorschwingung eines anderen Rotorblatts führt. Es ist jedoch auch möglich, alle Rotorblätter auf die gleiche Eigenfrequenz abzustimmen und Rotorblattschwingungen nur insoweit zu bedämpfen, als sie an der Nabe als überlagertes Ergebnis der Schwingungen aller Rotorblätter in Erscheinung treten. Dies minimiert zwar nicht die Belastung an den Rotorblättern, verbessert aber wenigstens die Netzqualität und verhindert, wie eingangs erläutert, eine übermäßige Getriebebelastung, wie sie sonst in Folge von Drehmomentumkehrungen auftreten könnte.

Weitere Verbesserungen der erfindungsgemäßen Windkraftanlage lassen sich erzielen, wenn die elektrische Maschine mit einer Energiespeichereinrichtung verbunden wird. Diese kann beispielsweise durch Pufferkondensatoren, Schwungradspeicher oder anderweitige Energiespeichereinrichtungen gebildet werden. Die Energiespeichereinrichtung kann z.B. mit einem Zwischenkreis verbunden, an den sowohl der Generator als auch die wenigstens zeitweilig als Motor betreibbare elektrische Maschine angeschlossen sind. Es können für die verschiedenen elektrischen Maschinen auch getrennte Zwischenkreise vorgesehen werden, die jeweils ihren eigenen Energiespeicher aufweisen.

Bei einer spezifischen Ausführungsform der Erfindung ist der Rotor mit wenigstens einem Sensor verbunden, der zur Überwachung der Drehzahl und/oder der Drehzahlveränderungen oder sonstiger Beschleunigungen dienen kann. Dieser Sensor ist vorzugsweise mit der Steuereinrichtung verbunden, die die als Motor betreibbare elektrische Maschine so ansteuert, dass Rotorschwingungen minimiert werden.

Zur Verbesserung der Netzqualität können nicht nur die oben genannten elektrischen oder elektromechanischen Speicher wie Kondensatoren oder Schwungradspeicher eingesetzt werden sondern es ist auch möglich, Energiespeicher unmittelbar mit schnell laufenden Wellen zu koppeln, die von dem Rotor angetrieben werden. Beispielsweise können einer oder alle Generatoren oder elektrischen Maschinen mit Schwungrädern versehen sein. Außerdem ist es möglich, einen Getriebestrang vorzusehen, der ein Schwungrad unmittelbar antreibt.

Weitere Einzelheiten vorteilhafter Ausführungsformen der Erfindung ergeben sich aus der Zeichnung, der Beschreibung oder aus Ansprüchen. Die Beschreibung beschränkt sich auf wesentliche Aspekte der Erfindung und sonstiger Gegebenheiten. Die Zeichnung ist ergänzend heranzuziehen.

In der Zeichnung sind Ausführungsbeispiele der Erfindung veranschaulicht. Es zeigen:
Figur 1 eine Windkraftanlage in schematischer perspektivischer Darstellung,
Figur 2 die Windkraftanlage nach Figur 1 in einer Prinzipdarstellung von vorne,
Figur 3 die Windkraftanlage nach Figur 2 in einer teilweise aufgeschnittenen Seitenansicht,
Figur 4 die Generatoren der Windkraftanlage und deren Verschaltung im Blockschaltbild und
Figur 5 eine alternative Ausführungsform der Windkraftanlage anhand ihres elektrischen Blockschaltbilds.

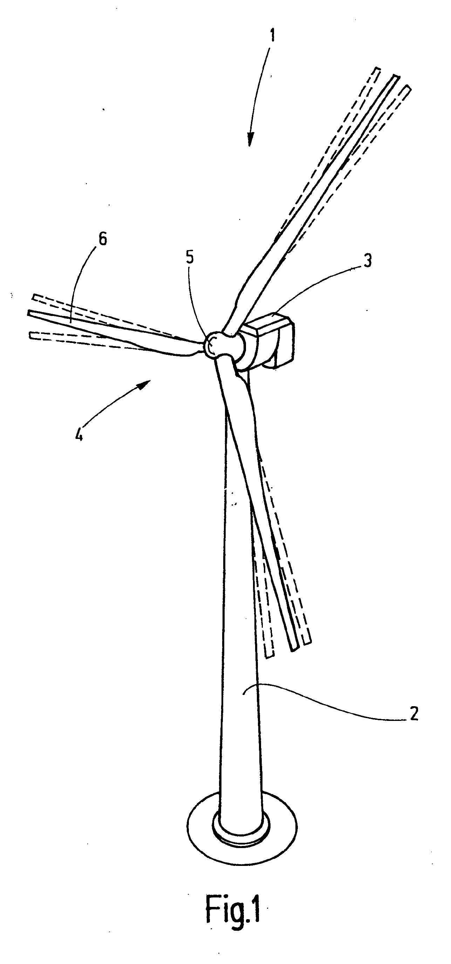

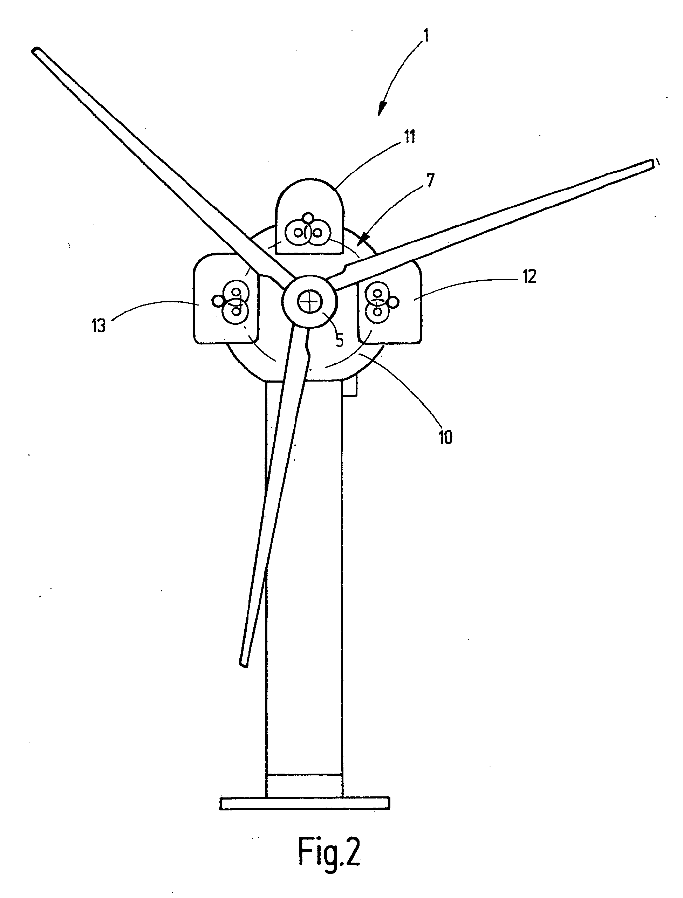

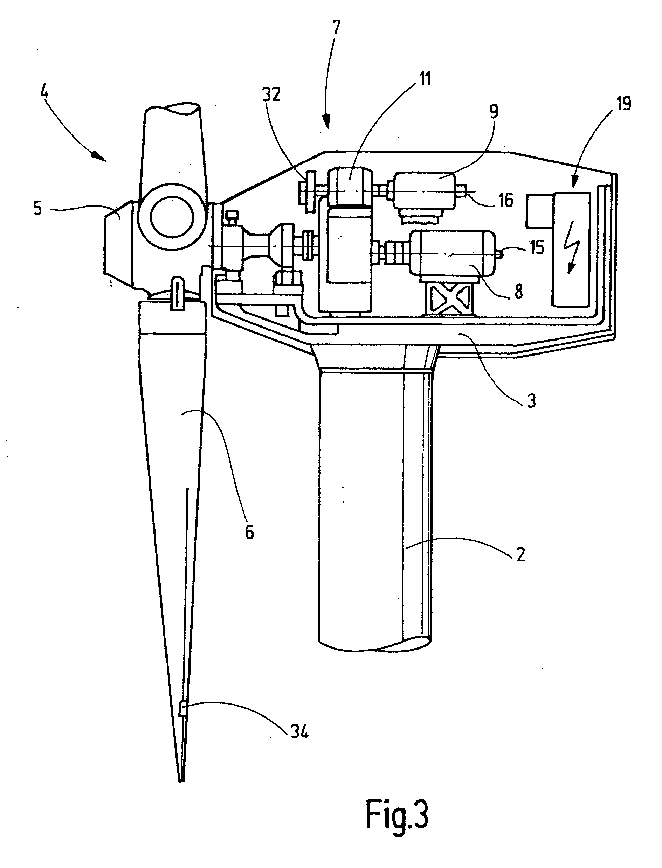

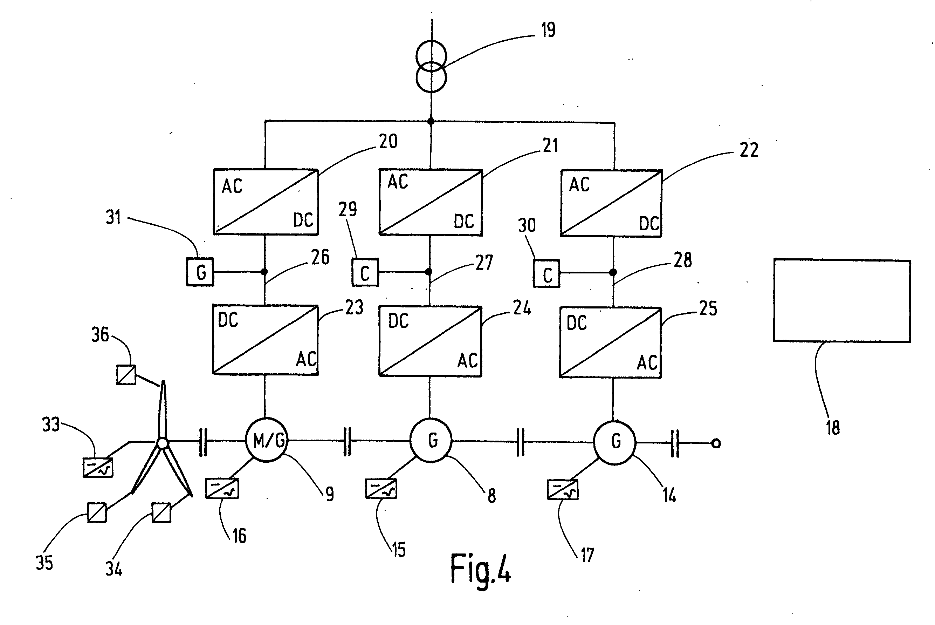

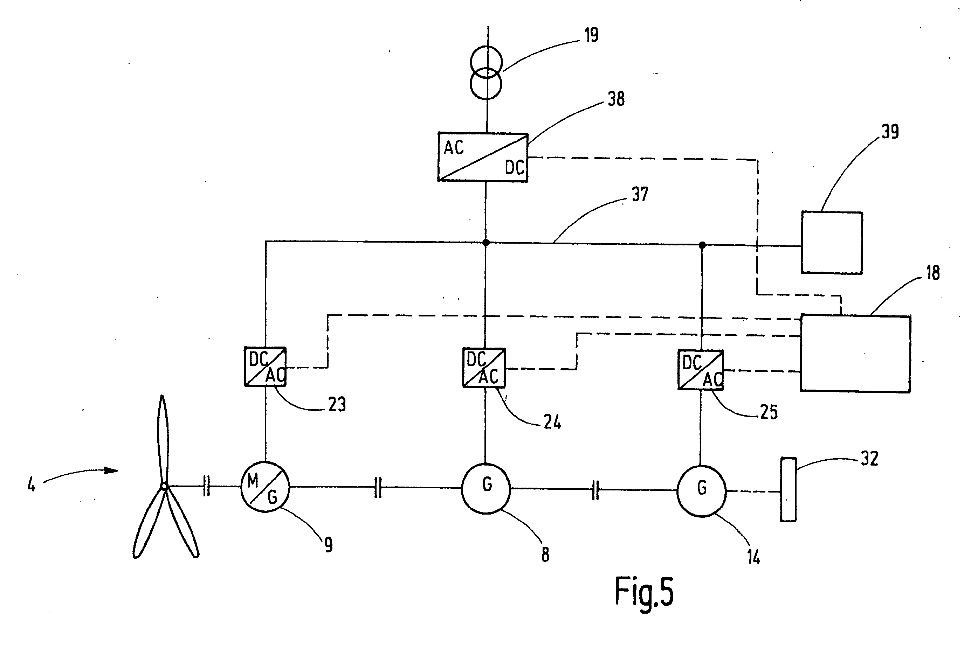

In Figur 1 ist eine Windkraftanlage 1 mit einem Turm 2, einer an dessen Spitze um eine Vertikalachse drehbar gelagerten Gondel 3 und einem Rotor 4 veranschaulicht, der um eine ungefähr horizontal orientierte Achse drehbar gelagert ist. Der Rotor 4 ist dreiflüglig aufgebaut. Von seiner Nabe 5 erstrecken sich drei Rotorblätter 6 ungefähr in Radialrichtung. Wie aus den Figuren 2 und 3 hervorgeht, treibt der Rotor 4 über ein Getriebe 7 mindestens einen elektrischen Generator 8 und zumindest eine weitere elektrische Maschine 9, die sowohl als Generator als auch als Motor dienen kann. Das Getriebe 7 ist dazu mit einer Leistungsverzweigung versehen. An ein zentrales Zahnrad 10 sind mehrere Teilgetriebe angeschlossen, die Getriebestränge 11, 12, 13 bilden. Über diese Getriebestränge 11, 12, 13 wird die langsame Rotordrehung in eine schnelle Drehung von beispielsweise 1000 Umdrehungen pro Minute oder darüber umgewandelt. An die Ausgangswellen der Getriebestränge 11, 12, 13 sind der Generator 8, die elektrische Maschine 9 sowie gegebenenfalls weitere Generatoren (Generator 14, Figuren 4 und 5) angeschlossen.

Die Generatoren 8, 14 und die elektrische Maschine 9 können bedarfsweise mit Encodern 15, 16, 17 verbunden sein, die die aktuelle Drehposition des Generators 8, 14 bzw. der elektrischen Maschine 9 an eine Steuerungseinrichtung 18 melden. Die Steuerungseinrichtung 18 kann in oder an der Gondel 3 oder auch in dem Turm 2 oder am Turmfuß angeordnet sein. Außerdem kann die Gondel 3 weitere elektrische Ausrüstungen tragen, wie beispielsweise einen Transformator 19 und verschieden Umrichter 20, 21, 22, 23, 24, 25. Beispielsweise kann jeden Generator 8, 14 sowie der elektrischen Maschine 9, die als Motor/Generator dient, ein gesteuerter Wechselrichter 23, 24, 25 zugeordnet sein. Diese Wechselrichter 23, 24, 25 sind jeweils an Gleichspannungszwischenkreise 26, 27, 28 angeschlossen. Diese sind über die Umrichter 20, 21, 22 mit dem Trafo 19 verbunden, der seinerseits mit einem öffentlichen Energieversorgungsnetz verbunden sein kann. Die Umrichter 20 bis 25 sind vorzugsweise von der Steuereinrichtung 18 gesteuert. An die Gleichspannungszwischenkreise 26, 27, 28 können Energiespeicher, z.B. in Form von Kondensatorspeichern 29, 30 oder ein Schwungradspeicher 31 angeschlossen sein. Beispielsweise ist der Schwungradspeicher 31 an den Gleichspannungszwischenkreis 26 angeschlossen, der über den Umrichter 23 mit dem Motorgenerator 9 verbunden ist.

Eine weitere Energiespeicherung kann bewirkt werden, indem an das Getriebe 7 ein oder mehrere Schwungräder angeschlossen sind. Beispielsweise kann ein Schwungrad 32 an den Getriebestrang 11 angeschlossen sein.

Des Weiteren können, wie aus Figur 3 und 4 hervorgeht, weitere Sensoren vorgesehen sein. Beispielswiese kann der Rotor 4 mit einem Encoder 33 verbunden sein, der die Drehposition des Rotors 4 an die Steuereinrichtung 18 meldet. Des Weiteren können die Rotorblätter 6 mit Beschleunigungssensoren 34, 35, 36 versehen sein, um Blattschwingungen zu erfassen. Die Beschleunigungssensoren 34, 35, 36 sind vorzugsweise in der Nähe der Blattspitzen angeordnet. Außerdem sind sie mit der Steuerungseinrichtung 18 verbunden.

Die insoweit beschriebene Windkraftanlage 1 arbeitet wie folgt:

Es wird zunächst von einer mittleren Windstärke ausgegangen, bei der die Windkraftanlage 1 nicht ihre Maximalleistung abgibt. Bei ruhigem Wind läuft der Rotor 4 relativ gleichmäßig. Die Generatoren 8, 14 erzeugen Strom, der von den Umsetzern 24, 25 zunächst gleichgerichtet und über die Gleichspannungszwischenkreise 27, 28 an die Umsetzer 21, 22 weiter gegeben wird. Diese erzeugen netzfrequente Spannung, die über den Transformator 19 ins öffentliche Netz eingespeist wird. Die elektrische Maschine 9 kann im Leerlauf mitlaufen und ist beispielsweise inaktiv.

Bei nicht ganz gleichmäßigem Lauf des Rotors 4, wie er beispielsweise durch leichte Windböen oder auch nur durch Windgeschwindigkeitsunterschiede zwischen niedrigeren und höheren Luftschichten verursacht werden, die von den Rotorblättern 6 durchstreift werden, kann es zweckmäßig sein, das über die Getriebestränge 12, 13 laufende Drehmoment zu erhöhen. Dies wird durch eine magnetische Vorspannung des Getriebes 7 erreicht. Diese wird bewirkt, indem die elektrische Maschine 9 als Motor betrieben wird. Sie arbeitet gleichsinnig mit dem Rotor 4, d.h. im Antriebssinne desselben. Ein Teil der von den Generatoren 8, 14 erzeugten und am Eingang des Transformators 19 anstehenden Energie wird abgezweigt und über den Umrichter 20, den Zwischenkreis 26 und den Umrichter 23 auf den Motor 9 geleitet. Dessen Drehmoment wirkt nun zusätzlich antreibend. Gleichzeitig wirkt der Motor 9 als zusätzliche Last für die Generatoren 8, 14. Dadurch wird das über die Getriebestränge 12, 13 laufende Drehmoment erhöht. Dadurch kann erreicht werden, dass auch wenn das Rotordrehmoment starken Schwankungen unterliegt, die Zahnflanken der Zahnräder der Getriebestränge 12, 13 fortwährend in Eingriff bleiben und in den Getriebesträngen 12, 13 jede Drehmomentumkehr vermieden wird. Eine solche Drehmomentumkehr könnte ansonsten auftreten, wenn die Generatoren 8, 14 mit geringer Last, als im Wesentlichen ungebremst laufen und der Rotor 4 kurzzeitig kein Antriebsdrehmoment erzeugt. Ebenso könnten solche Drehmomentumkehrungen ansonsten kurzzeitig auftreten, wenn Rotorblattschwingungen auftreten. Durch die Vorspannung der Getriebestränge 12, 13 und letztlich auch des Getriebestrangs 11 wird vorhandenes mechanisches Getriebespiel unwirksam gemacht und die Getriebelebensdauer erhöht.

Es ist des Weiteren möglich, über eine intelligente Steuerung der elektrischen Maschine 9 Rotorblattschwingungen vorzubeugen. Diese treten beispielsweise an der Nabe 5 in Erscheinung und erzeugen an dem Encoder 33 entsprechende Signale. Der Motor 9 kann mit einer gegenphasig modulierten Ansteuerleistung beaufschlagt werden, um die Rotorschwingung gegenzukoppeln.

Es ist des Weiteren möglich, die von den Bescheunigungssensoren 34, 35, 36 gelieferten Signale auszuwerten. Diese können Rotorblattschwingungen anzeigen, bevor diese als Naben-Torsionsschwingungen in Erscheinung treten. Die Steuerung 18 kann den Motor 9 nun so ansteuern, dass diese Rotorblattschwingungen aktiv getilgt werden.

Dies ist insbesondere dann möglich, wenn die Rotorblätter 6 unterschiedliche Eigenfrequenzen aufweisen. So wird vermieden, dass die Gegenkopplung einer Rotorblattschwingung zugleich zur Anregung einer Blattschwingung eines anderen Rotorblatts wird.

Die aktive Beseitigung von Rotor-Drehschwingungen verbessert die Netzqualität, die ansonsten durch einmal angefachte Rotorblattschwingungen und Rotordrehschwingungen erheblich leiden würde. Die Netzqualität kann weiter verbessert werden, wenn die an die Gleichspannungszwischenkreise 26, 27, 28 angeschlossenen Energiespeicher genutzt werden. Dies betrifft insbesondere ihre Nutzung zur Kompensation von Rotorblattschwingungen bzw. Rotor-Drehschwingungen. Außerdem können Leistungsfluktuationen der abgegebenen Generatorleistung ausgeglichen werden.

Das Regelungssystem kann des Weiteren so geführt werden, dass die elektrische Maschine 9 bei starkem Wind als Generator betrieben wird. Damit ist die verfügbare Generatorleistung erhöht und die Leistungsausbeute der Anlage kann gesteigert werden. Bei entsprechender Regelung können auch kurzzeitige Drehmomentspitzen, die von den Beschleunigungssensoren 34, 35, 36 erfasst werden, gefiltert und gedämpft werden. Es ist dazu auch möglich, die elektrische Maschine 9 in schneller Folge abwechselnd als Motor oder Generator zu betreiben.

Bei kurzzeitigen Drehmomentspitzen können die vorhandenen Energiespeicher 29, 30, 31 sowie gegebenenfalls 32 eine Glättung der abgegebenen Systemleistung übernehmen. Außerdem kann die Steuerung 18 einen selbstlernenden Regelkreis bilden, der das System optimiert. Beispielsweise können Warnungen eines Zentralservers über anrollende Böen dazu genutzt werden, die Vorspannung des Systems zu erhöhen. Die Vorspannung des Systems kann erhöht werden, indem die Motorleistung der elektrischen Maschine 9 erhöht wird.

In Figur 5 ist eine abgewandelte Ausführungsform der Erfindung veranschaulicht. Diese stimmt weitgehend mit der vorbeschriebenen Anlage überein. Entsprechend wird auf die vorstehende Beschreibung verwiesen. Die Unterschiede sind in einem gemeinsamen Gleichspannungszwischenkreis 37 zu finden, der über lediglich einen einzelnen Umrichter 38 mit dem Transformator 19 verbunden ist. Dieser gemeinsame Gleichspannungszwischenkreis ist an die Umrichter 23, 24, 25 angeschlossen. Der Gleichspannungszwischenkreis 37 ist mit einem Energiespeicher 39 verbunden, der beispielsweise als Kondensatorbatterie oder als Schwungradspeicher ausgebildet sein kann. Wiederum untersteht das gesamte System der Regelung der Steuereinrichtung 18. Es können die vorgenannten Regelprinzipien umgesetzt werden. Der Motorgenerator 9 kann seine elektrische Energie nun unmittelbar aus dem gemeinsamen Gleichspannungszwischenkreis 37 beziehen.

Eine Windkraftanlage 1 weist ein Getriebe auf, über das zumindest zwei elektrische Maschinen 8, 9 angekoppelt sind. Eine (8) läuft als Generator. Die andere (9) kann sowohl als Generator als auch als Motor laufen. Im Motorbetrieb bewirkt sie die Verspannung des Getriebes und beseitigt so die schädlichen Auswirkungen von Drehmomentschwankungen, die ansonsten zu Getriebeschäden führen könnten. Dies ermöglicht den Einsatz von Getrieben mit relativ grober Verzahnung und relativ großem Zahnflankenspiel und mindert zugleich die zu berücksichtigenden Getriebelasten.

### Bezugszeichenliste

- 1: Windkraftanlage
- 2: Turm
- 3: Gondel
- 4: Rotor
- 5: Nabe
- 6: Rotorblatt
- 7: Getriebe
- 8: Generator
- 9: elektrische Maschine
- 10: Zahnrad
- 11: Getriebestrang
- 12: Getriebestrang
- 13: Getriebestrang
- 14: Generator
- 15: Encoder
- 16: Encoder
- 17: Encoder
- 18: Steuerungseinrichtung
- 19: Transformator
- 20-25: Umrichter
- 26-28: Gleichspannungszwischenkreise
- 29, 30: Kondensatorspeicher
- 31: Schwungradspeicher
- 32: Schwungrad
- 33: Encoder
- 34-36: Beschleunigungssensoren
- 37: Gleichspannungszwischenkreis
- 38: Umrichter
- 39: Energiespeicher

## Patentansprüche

1. Windkraftanlage (1) mit
Rotor (4), der an einer drehbar gelagerten Welle gehalten ist,
mit wenigstens einem Generator (8), der mit dem Rotor (4) über ein Übersetzungsgetriebe (7) verbunden ist,
mit wenigstens einer als Motor betreibbaren elektrischen Maschine (9), die über das Übersetzungsgetriebe (7) mit dem Rotor (4) verbunden ist.

2. Windkraftanlage nach Anspruch 1, **dadurch gekennzeichnet, dass** die elektrische Maschine (9) von einer Steuereinrichtung (18) gesteuert ist, mittels derer das von der elektrischen Maschine (9) auf das Getriebe (7) ausgeübte Drehmoment steuerbar ist.

3. Windkraftanlage nach Anspruch 1, **dadurch gekennzeichnet, dass** das von der elektrischen Maschine (9) ausgeübte Drehmoment geringer ist als das von dem Generator (8) ausgeübte Drehmoment.

4. Windkraftanlage nach Anspruch 1, **dadurch gekennzeichnet, dass** eine Steuereinrichtung (18) das von der elektrischen Maschine (9) ausgeübte Drehmoment moduliert, um einer Rotorblattschwingung entgegenzuwirken.

5. Windkraftanlage nach Anspruch 1, **dadurch gekennzeichnet, dass** das Getriebe (7) einen ersten Getriebestrang (12) aufweist, der den Rotor (4) mit dem Generator (8) verbindet und das das Getriebe (7) einen zweiten Getriebestrang (11) aufweist, der den Rotor (4) mit der als Motor betreibbaren elektrischen Maschine (9) verbindet.

6. Windkraftanlage nach Anspruch 5, **dadurch gekennzeichnet, dass** eine Steuereinrichtung (18) das von der elektrischen Maschine (9) ausgeübte Drehmoment so einstellt, dass Drehmomentwechsel an dem zu dem Generator (8) führenden Getriebestrang (12) vermieden werden.

7. Windkraftanlage nach Anspruch 1, **dadurch gekennzeichnet, dass** eine Steuereinrichtung (18) das von der elektrischen Maschine (9) ausgeübte Drehmoment so reguliert, dass Modulationen der von dem Generator (8) abgegebenen Leistung minimiert werden.

8. Windkraftanlage nach Anspruch 1 oder 7, **dadurch gekennzeichnet, dass** die elektrische Maschine (9) mit einer Energiespeichereinrichtung (31, 32) verbunden ist.

9. Windkraftanlage nach Anspruch 1, **dadurch gekennzeichnet**, der Generator (8) und/oder die elektrische Maschine (9) über einen Umrichter mit einem Gleichspannungs- oder Gleichstromzwischenkreis (27, 28, 37) verbunden sind.

10. Windkraftanlage nach Anspruch 9, **dadurch gekennzeichnet**, an den Gleichspannungs- oder Gleichstromzwischenkreis (27, 28, 37) ein Energiespeicher (29, 30, 39) angeschlossen ist.

11. Windkraftanlage nach Anspruch 1, **dadurch gekennzeichnet, dass** die elektrische Maschine (9) zumindest zeitweilig einen Generator bildet.

12. Windkraftanlage nach Anspruch 1, **dadurch gekennzeichnet, dass** der Rotor (4) wenigstens einen Beschleunigungssensor (34) aufweist.

13. Windkraftanlage nach Anspruch 1, **dadurch gekennzeichnet, dass** der Rotor (4) treibend mit einem Schwungrad (32) verbunden ist.

14. Windkraftanlage nach Anspruch 1, **dadurch gekennzeichnet, dass** durch die elektrische Maschine (9) im Motorbetrieb eine Verspannung des Getriebes (7) vorgenommen wird.

15. Windkraftanlage nach Anspruch 14, **dadurch gekennzeichnet, dass** die Verspannung durch die Steuereinrichtung (18) lastabhängig festgelegt wird.
